# EUROPEAN PATENT APPLICATION

(11) **EP 1 348 672 A2**
(43) Date of publication of application: **01.10.2003**
(21) Application number: 03090077.3
(22) Date of filing: 21.03.2003
(51) Int. Cl.: C03B 35/20, C03B 35/14, C03B 23/03

(54) **Apparatus and method for handling and positioning hot glass sheet during its transfer**

(30) Priority: 28.03.2002 US 108954
(71) Applicant: Pilkington North America, Inc., Toledo, Ohio 43697 (US)
(72) Inventor: Dunifon, Thomas A., Whitehouse, Ohio 43571 (US)
(74) Representative: Pfenning, Meinig & Partner

(57) **Abstract**

A conveyor system includes a transfer section conveyor arrangement for quickly transporting glass sheets from a furnace conveyor to a glass processing apparatus and accurately positioning the glass sheet for further processing. The conveyor system includes specially designed locator pads, which are designed to engage the glass sheet, upon the glass sheet exiting the furnace. The locator pads are designed to engage and properly align the glass sheet for the bending process. The pads are driven by a gearing apparatus, which allows conveyance in two substantially perpendicular directions of motion so that the glass sheet can be properly aligned in the press bending molds.

## Description

### BACKGROUND OF THE INVENTION

The present invention relates generally to transporting glass sheets, and more particularly, to an improved system for aligning glass after exit from a heating furnace in preparation for subsequent processing such as a press bending.

Glass sheets are commonly used for vehicle windows such as side windows, rear windows and windshields. The glass sheets are bent to precisely defined shapes as dictated by the configuration and size of the openings and the overall styling of the vehicles in which the windows are to be installed. The invention would typically be used in conjunction with windshields, which are typically laminated subsequent to the pressing operation. In addition, the windows may be tempered to increase their resistance to damage resulting from impact and, in the event of breakage, to fragment into relatively small harmless particles as opposed to the large, jagged, potentially dangerous pieces otherwise resulting from untempered glass sheets when broken. The bent and tempered windows must meet stringent optical requirements whereby they are free of surface defects and optical distortions that would interfere with clear vision therethrough.

One process that has been successful in producing bent, tempered vehicle windows from glass sheets is the horizontal press bending technique. This technique generally includes heating pretrimmed flat sheets of glass to their softening or bending temperatures by advancing them on a roll conveyor through a heating furnace, bending the heated glass sheets to a desired curvature or shape between a pair of complementary mold members and then tempering the same by chilling the bent glass sheets in a controlled manner to a temperature below the annealing range of glass.

Glass sheet heating furnaces generally have an elongated refractory chamber through which the glass sheets are conveyed in succession upon a furnace conveyor. Heat is provided by suitable gas or electric heating elements positioned in the roof and side walls to heat the interior of the furnace. The furnace walls and roof are stationary members built up of refractory blocks. The furnace conveyor includes a series of spaced rolls extending across the furnace transverse to the direction of motion of the glass sheets. Each of the conveyor rolls includes a circumferentially outer surface which cooperates with the outer surfaces of the adjacent conveyor rolls to form a conveying surface for supporting the glass sheets and moving them through the furnace.

Once the glass sheet has been heated to the optimum temperature, the heated glass sheet is transported out of the furnace to the press bending apparatus on a transfer section conveyor. It is important that the glass sheet be at the optimum temperature when it reaches the bending apparatus. If the temperature of the glass sheet is too cool, it will not be sufficiently soft for expedient and proper bending. On the other hand, if the glass sheet is overheated, it will be too pliable and will tend to sag out of the desired shape beyond the prescribed tolerances after bending. However, after the glass sheet-exits the furnace it begins to cool. It is desirable to transport the heated glass sheet to the press bending apparatus quickly to minimize the cooling.

When the glass sheet reaches the press bending apparatus, it is received by the mold members for bending. The glass sheet must be precisely aligned with the mold members to bend the sheet within acceptable tolerances. Therefore, it is desirable to accurately position the glass sheet with respect to the mold member for proper alignment. It is known to use stops which stop the moving sheet when it has reached a predetermined location in alignment with the mold members as disclosed by Herrington, et al (U.S. Patent No. 4,952,227). However, aligning the glass sheet with stops may cause the moving sheet to rebound off of the stops and out of alignment before it is received by the mold members.

U.S. Patent No. 5,403,369 to McMaster et al. discloses an apparatus for positioning heated glass sheets. A positioner is mounted longitudinally and laterally movable with respect to a mold. Engagement members of the positioner engage the periphery of the glass sheet upstream of the mold and transport the glass sheet downstream to the mold.

U.S. Patent No. 5,066,321 to Kramer et al. discloses a positioning device for catching a hot glass sheet in a glass sheet heating furnace. The positioning device catches and the decelerates the glass sheet.

U.S. Patent No. 5,411,128 to Vild et al. discloses an apparatus and method for positioning a heated glass sheet on rolls. A positioner positions the glass sheet while out of contact with the rolls.

U.S. Patent No. 4,802,904 to Boutier et al. discloses a process for bending glass plates into convex shapes. Side engaging positioning devices engage the glass sheet to position it for press bending.

U.S. Patent No. 5,902,366 to Schnabel Jr. et al. discloses a glass locating system including a locating assembly that receives a glass sheet. The device includes arms entering the conveyor area from the opposing sides, each arm including first and second locators. The locators are rotatively driven to control the location of the glass sheet.

High levels of precision are required for locating the glass with respect to the pressing operation. Glass oriented improperly results in wastage and therefore lowered economic efficiency. Recent developments in automotive glass lead to the use of thinner glass and more complex designs. Both of these factors increase the need for the precise locating of glass entering the forming operation, as allowable tolerances continue to decrease.

### SUMMARY OF THE INVENTION

The present invention relates to an improved conveyor system including a transfer section conveyor arrangement for quickly transporting glass sheets from a furnace conveyor to a glass processing apparatus and accurately positioning the glass sheet for further processing.

In accordance with the present invention, there is provided a glass sheet transport and locating system for proper positioning of a glass sheet exiting the furnace conveyor and entering the forming operation. The forming operation preferably utilizes known press bending molds and techniques for forming the glass. The locating system includes a transfer section conveyor arrangement to convey the glass sheet from the furnace to the press bending molds. The transfer section conveyor preferably utilizes a known hot air flotation process to convey the glass to the press bending molds. Flotation systems are preferred for the transfer section because this minimizes the frictional contact with the glass sheet, thus allowing the glass to be positioned extremely accurately with minimal force required along the glass edge. Additionally, however, the system can operate with known roller systems to convey the glass from the furnace to the forming operation. The conveyor includes a first axial control located adjacent and sequentially after the furnace conveyor and a second axial control operating in conjunction with the first axial control. Each of the axial controls includes a driving system with gearing to orient the glass sheet in the desired position for press bending. The system utilizes at least two locator pads to orient the glass sheet for entering the pressing operation. Thus the conveyor system preferentially engages the glass sheet subsequent to the exit of the glass sheet from the furnace conveyor.

The invention also relates to an improved method of transporting glass sheets from a furnace conveyor to a processing apparatus for further processing. The glass sheets are moved from the furnace and engaged by a locating system including first and second axial controls. Sensing means, e.g. a photoelectric eye, senses the exit of the glass sheet from the furnace and engages the locating system. The locating system includes drives and gearing for controlling orientation of the glass sheet in two axes within a plane. The locating system uses a pair of locator pads to control the positioning and motion of the glass sheet with respect to the conveyor. The glass is engaged by the locating system and properly oriented for the processing apparatus. The preferred processing apparatus is a press bending apparatus including a female ring member and male mold member having opposed complementary shaping surfaces conforming in curvature to the desired shape of the glass sheets when bent

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is a plan view of a glass processing apparatus in accordance with the invention.
Fig. 2 is a sectional view taken along line 2-2 in Fig. 1.
Fig. 3 is a plan view of one of the tracks of the transfer section in accordance with the invention.
Fig. 4 is an elevational view of the track of the transfer section shown in Fig. 3.
Fig. 5 is a plan view of a locator pad and the associated mechanism in accordance with a preferred embodiment of the invention.
Fig. 6 is a sectional view taken along line 6-6 in Fig. 3.
Fig. 7 is a sectional view taken along line 7-7 of Fig. 3.
Fig. 8 is a plan view of an alternate embodiment of the glass locator pads.
Fig. 9 is a plan view of another alternative embodiment of the glass locator pads.

### DESCRIPTION OF THE PREFERRED EMBODIMENT

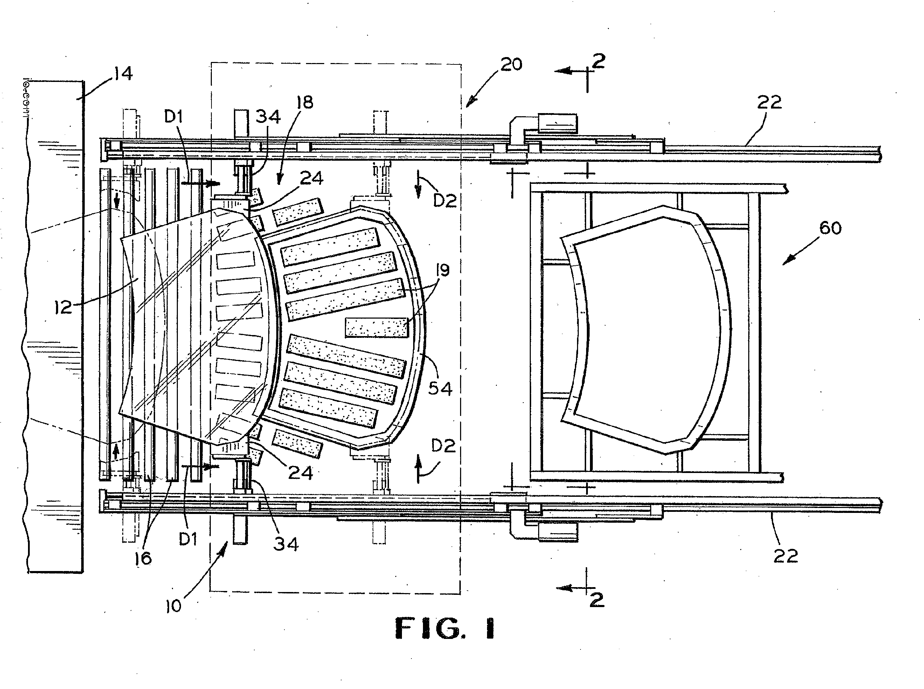

There is shown in Fig. 1 a locating system 10 for a glass processing system. The locating system 10 is designed to engage a sheet of glass 12 upon its exit from a furnace 14. The glass sheet 12 is conveyed from the furnace 14 to an air flotation system 18 by prepress rollers 16. The air flotation system 18 carries the glass sheet 12 to a pressing system 20, wherein the glass is formed into its desired shape. Upon exiting the pressing system 20, a shuttle 60 is provided to remove the pressed glass sheet from the pressing system 20.

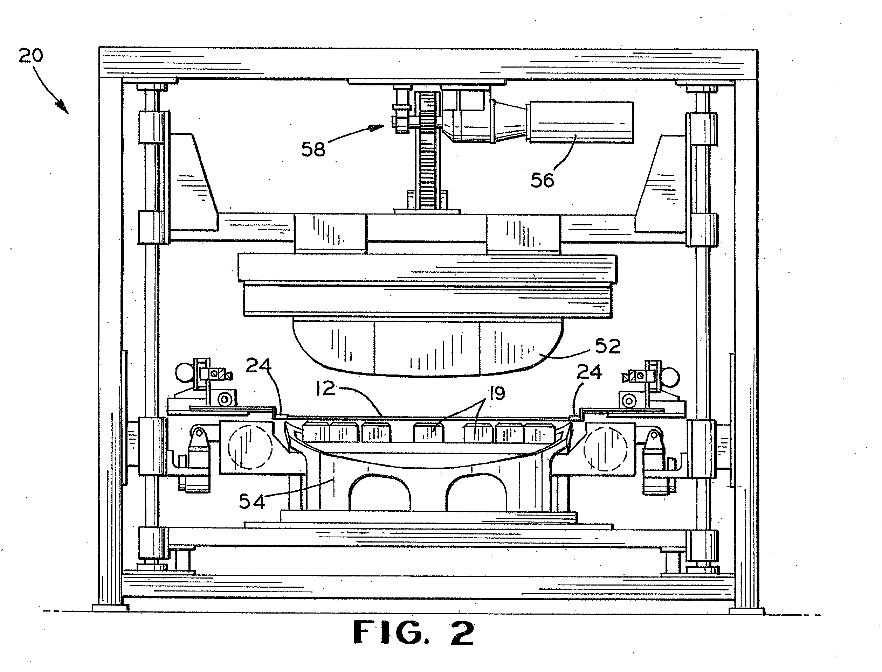

More detail of'the pressing system 20 is shown in Fig. 2. In a conventional pressing system, a vacuum male mold 52 is located above a female ring mold 54. In a preferred embodiment of the present invention, the female mold 54 is made primarily of a steel or stainless steel material. The female mold can also be made of a ceramic material. The male mold 52 is driven by a motor 56, with an associated gear system 58, toward the female mold 54, and the glass sheet 12 is thus pressed between the molds 52, 54. The gear system 58 is preferably a rack and pinion system. Alternative pressing devices are possible within the scope of the present invention. Subsequent to the pressing operation, a shuttle 60 can be used to remove the pressed glass sheet from the pressing area.

The total processing system can include further processing steps (e.g. chilling), which are not germane to the present invention and are not further discussed herein.

The locating system 10 includes 2 tracks 22 which are substantially mirror images of one another. The tracks 22 control the position of locator pads 24, which control the position and orientation of the glass sheet 12 as it progresses along the air flotation system 18. The locating system 10 engages the glass sheet 12 upon its exit from the furnace 14, and preferably as the leading edge of the glass sheet 12 exits the prepress rollers 16. The locating system 10 conveys the glass sheet 12 to the pressing system 20 where the locator pads 24 disengage from the glass sheet 12, so that the glass sheet can be pressed. It is significant that these pads disengage from the glass sheet 12 during the pressing process in order to minimize breaking of the glass sheets 12. Upon disengagement, the locator pads 24 are then moved along the tracks 22 to their original position for engaging another sheet 12 exiting the furnace 14.

The locating system 10 works by simultaneous motion of the locator pads 24 in two directions of motion. First, the pads are moving along rails 22 in direction D1, which is also the direction of the glass sheet 12 as it exits the furnace 14. A sensing system, e.g. a photoelectric eye (not shown) detects the glass sheet 12 exiting the furnace 14 and, through a computerized control system (not shown), causes the locator system 10 to rapidly accelerate in the direction of travel D1. The computer control system also directs the locator system 10 to move arm 34 transverse to the rails 22 to thus move the locator pad 24 in the direction D2. It should be noted that the pads 24 move in toward the glass sheet 12, thus the direction of travel D2 will be reversed 180 degrees for the pad 24 on the opposing side of the glass sheet 12. This movement in direction D2 causes the pads to engage the glass sheet 12, and through the unique contact surface, orient the glass sheet in the proper position for press bending. Preferably, upon contact between the locator pads 24 and the glass sheet 12, the locators are moving at a slightly faster speed in direction D1 than the glass sheet 12, and catch up to the sheet after it exits the furnace. Alternatively, it can be designed so that the locator system 10 moves at the same speed as the glass sheet or slower than the glass sheet, allowing the glass sheet to catch up to the locator system for positioning.

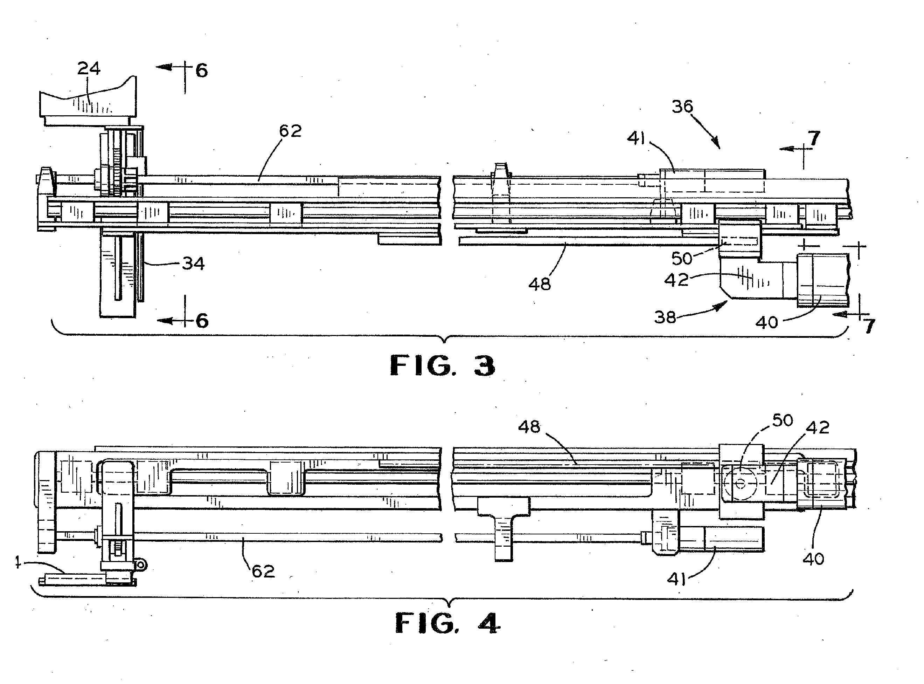

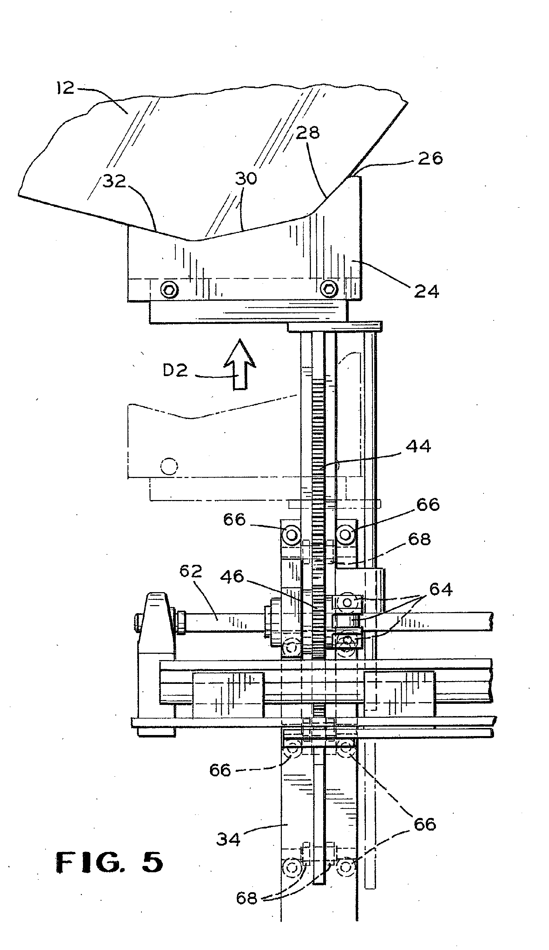

Figures 3 and 4 illustrate one of the rails or tracks 22 upon which the locator pads 24 move. In order to allow movement in both direction D1 and direction D2, the system employs two drive assemblies 36, 38. It has been found that the system preferably incorporates two essentially separate drive mechanisms, in order to allow the entire carriage assembly to move toward the pressing device, while simultaneously moving the pads into contact with the glass sheet to properly orient the glass sheet. Therefore, drive system 36 utilizes a first servomotor 40 and to drive the locator pad in direction D2 (and also 180 degrees from direction D2 to return the locator to its starting position.) In a preferred embodiment (see Fig 5) the drive assembly 36 utilizes motor 41 to drive a rack 44 and pinion 46 gear system (see Fig. 5) to drive the pads 24. While a rack and pinion system is illustrated herein, other known types of gearing or linkage systems may be utilized to drive the pad with arm 34 in direction D2 and in the opposite direction of direction D2.

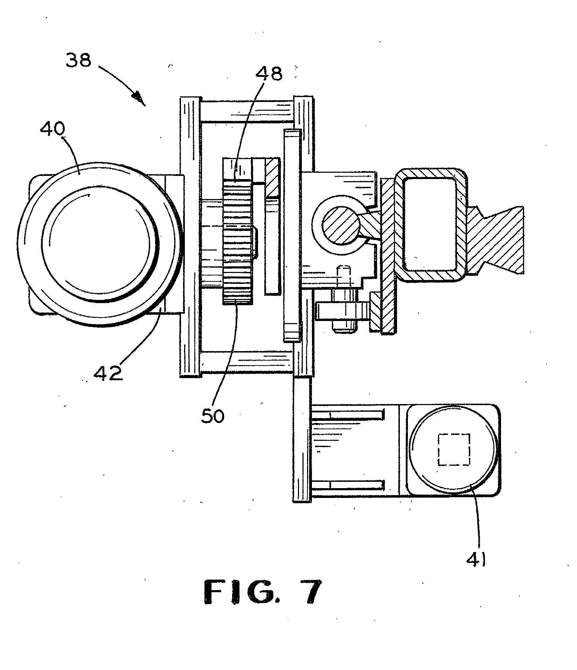

The second drive assembly 38 uses carriage motor 40 in conjunction with a right angle gearbox 42 to drive a rack 48 and pinion 50 (see Fig. 7) to thus drive the carriage (and the pads) in direction D1 (and in the opposite direction of direction D1.) Again, the nature of the gearing system is not essential to the invention. The rack and pinion system utilized herein describes a preferred embodiment. Any gearing system allowing transport of the pads 24 in the proper direction is acceptable.

Thus the two drive assemblies 36, 38 in combination provide for motion of the pads in both directions D1 and D2. This allows the pads 24 to both travel with the glass sheet 12 in direction D1, and to also travel transverse to the glass sheet 12 in direction D2 (or opposite direction D2 for the opposing pad).

Figure 5 illustrates an embodiment of the pad 24 and part of the support mechanism, in conjunction with the present invention. The present invention operates by choosing a uniquely shaped portion of the periphery of the glass sheet 12, and designing a locator pad 24 to specifically engage with this uniquely shaped portion and thus orient the glass sheet 12 for entry into the glass pressing operation.

As shown in this embodiment, pad 24 includes a first section 26 substantially parallel to the rail 22. This section 26 does not engage the glass -sheet 12. The locator then includes a substantially straight section 28, proceeding at an acute angle from the section 26 toward the rail 22. Another substantially straight section 30 then proceeds from Section 28 at a less acute angle toward the rail 22. A final section 32 then projects away from the rail 22. The shape of this locating surface, as discussed above, is preferably chosen based upon the shape of the glass sheet 12 to be press bent. -Other shapes of pressing surfaces are suitable for different glass sheets.

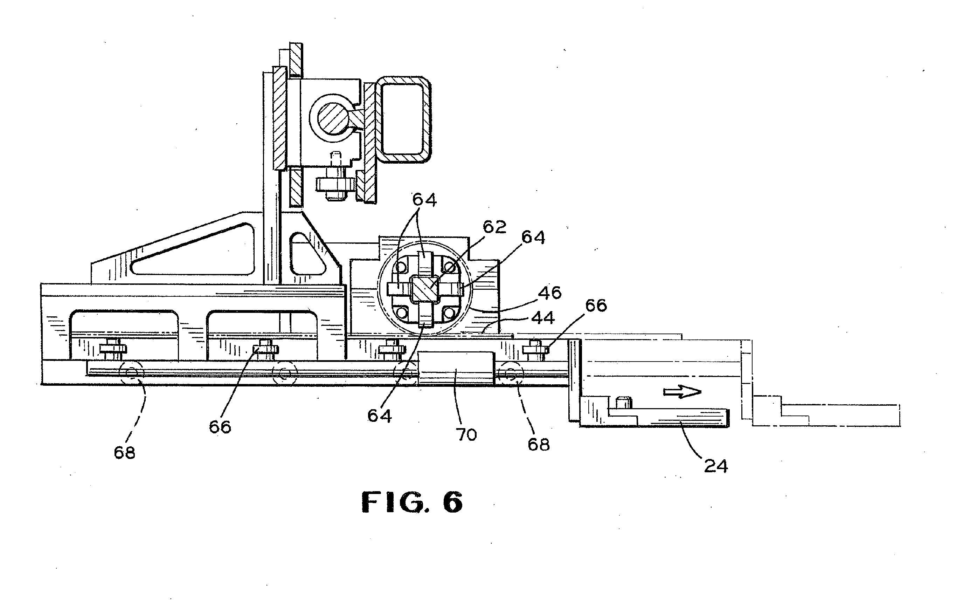

This Figure and Fig. 6 also -depict additional detail of an embodiment of the gearing system. Connecting the motor 40 and the rack 44 and pinion 46 system is the square drive shaft 62. Pinion support rollers 64 support the rack and pinion system, and guide rollers 66 provide support for the gearing system and the arm 34. A shaft bearing 70 provides additional support for the shaft, as do bottom support rollers 68.

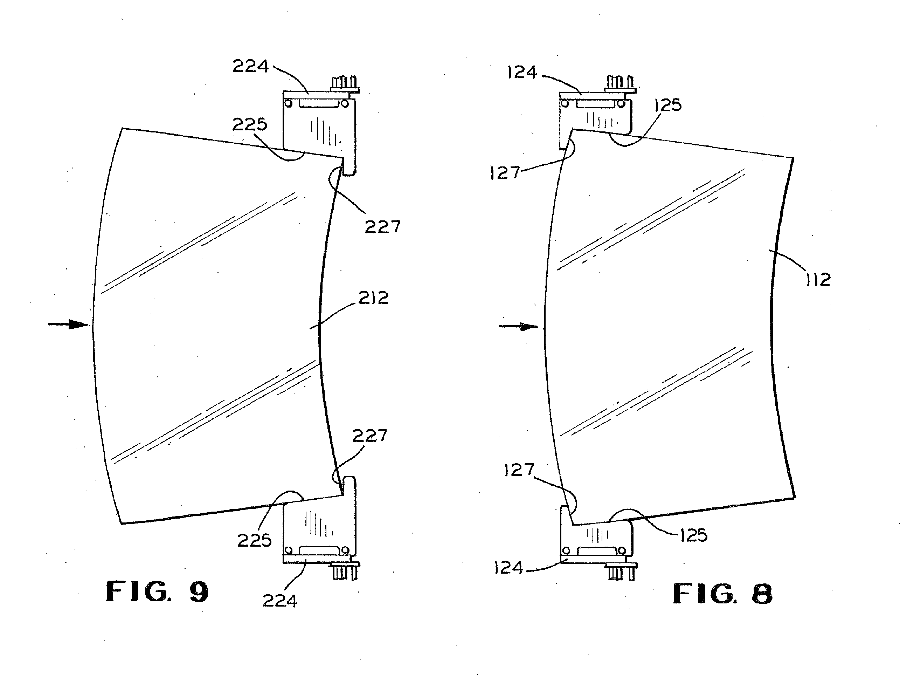

Figure 8 discloses an alternative embodiment of locator pads 124, designed for use with a differently shaped glass sheet 112. The locator pads 124 include a first contact face 125, which engages a side of the glass sheet 112, and a second contact face 127, which engages the rear of the sheet 112. As with the previously described embodiment, the pads 124 move toward the glass sheet 112, until contact is made to engage the sheet 112 on the contact faces 125, 127. As opposed to the embodiment shown in Figure 1, this embodiment engages the sides and the trailing edge of the glass sheet 112 instead of the sides and leading edge of the sheet 112. Since the pads 124 do not engage the leading edge of the glass sheet 112, deceleration of the sheet 112 by the pads 124 can be preferably initiated by frictional contact between the side contact faces 125 and the sheet 112.

In order to hold the sheet 112, the contact faces 125, 127 of the locator 124 form an obtuse angle, to fit the trailing edge of the glass sheet. Again, the surfaces 125, 127 of these pads are designed to uniquely fit a specified area of the sheet 112, in order to properly orient the glass sheet 112 for alignment in the press bending molds.

An additional embodiment of the locator pads 224 is shown in Figure 9. In this embodiment, the pads 224 again engage the sides and the leading edge of the glass sheet 212 by contact faces 225 and 227 of the pads 224. In this embodiment, face 225 of the pad 224 engages the side of the glass sheet 212, while face 227 of the pad 224 engages the leading edge of the glass sheet 212. Again, the faces 225, 227 form an obtuse angle with respect to one another. It should be noted in this embodiment that surface 227 makes contact only over a relatively small part of its surface with glass sheet 212. This is because the pads 224 engage the glass sheet 212 from the sides, while simultaneously traveling in direction D1. This provides clearance for the contact surfaces 227 to clear the sides of the glass sheet 212 and then to contact the leading edge of the glass sheet 212, for control of the glass sheet 212 as it enters the pressing molds. It has generally been found that the best results for the invention have been attained where the contact between the glass sheet and the locator pads has been limited to as small a surface area as possible.

## Claims

1. A locating system for a heated glass sheet comprising:
a pair of locator pads configured to engage a distinctly shaped surface of a heated glass sheet; and
a gearing arrangement operatively connected to said pair of locator pads, said gearing arrangement being configured to move the locator pads in a first direction of motion and to orient the glass sheet for processing.

2. The locating system according to claim 1, wherein each of said pair of locator pads is configured to engage a side edge of the glass sheet.

3. The locating system according to claim 2, wherein each of said pair of locator pads is further configured to engage a leading edge of the glass sheet.

4. The locating system according to claim 2, wherein each of said locating pads is configured to also engage a trailing edge of the glass sheet.

5. The locating system according to claim 1, wherein said gearing arrangement comprises a first rack and pinion gear system to move said locator pads in said first direction of motion.

6. The locating system according to claim 5, wherein said gearing arrangement further comprises a second rack and pinion gearing system to move said locator pads in a second direction of motion, said second direction of motion being substantially perpendicular to said first direction of motion.

7. The locating system according to claim 1, wherein each pad comprises a side configured to contact the glass sheet, said side comprising:
a first portion which is not configured to contact the glass sheet, said first portion being substantially parallel to the first direction of motion;
a second portion adjacent said first portion, said second portion forming an acute angle with said first portion;
a third portion forming an obtuse angle with said second portion; and
a fourth portion forming an acute angle with said third portion;
said second, third and fourth portions forming a substantially concave surface for contacting the glass sheet.

8. The locating system according to claim 1, wherein each said pad comprises:
a first portion being configured to contact a leading edge of the glass sheet as the glass sheet travels in the first direction of motion; and
a second portion forming an obtuse angle with said first portion, and being configured to contact a side of the glass sheet.

9. The locating system according to claim 1, wherein each said pad comprises:
a first portion being configured to contact a trailing edge of the glass sheet as the glass sheet moves in the first direction of motion; and
a second portion forming an obtuse angle with said first portion, and being configured to contact a side of the glass sheet.

10. The locating system according to claim 1, wherein said processing comprises press bending.

11. A method of conveying a glass sheet from a furnace to a press bending operation in a desired alignment, said method comprising:
providing a pair of locator pads, each of said pads being configured to contact a distinct portion of the outer periphery of the glass sheet;
moving the pair of locator pads in a first direction of motion toward the press bending apparatus, while simultaneously moving the pair of locator pads in a second direction of motion toward the glass sheet; and
engaging the glass sheet with the locator pads to properly align the glass sheet for subsequent processing.

12. The method according to claim 11, wherein said pair of locator pads are configured to engage the opposing sides of the glass sheet.

13. The method according to claim 12, wherein the locator pads are further configured to engage the leading edge of the glass sheet, in the first direction of motion.

14. The method according to claim 12, wherein the locator pads are further configured to engage the trailing edge of the glass sheet, in the first direction of motion.
